# FASCICULE DE BREVET EUROPEEN

(11) **EP 3 175 100 B1**
(45) Date de publication et mention de la délivrance du brevet: **26.08.2020**
(21) Numéro de dépôt: 15717579.5
(22) Date de dépôt: 31.03.2015
(51) Int. Cl.: F02B 25/06, F02B 31/04, F02F 1/22, F02B 75/02, F02B 25/04, F02B 75/00

(54) **MOTEUR THERMIQUE DEUX TEMPS DE VÉHICULE AUTOMOBILE À LUMIÈRES D'ADMISSION VRILLÉES AVEC DES ARÊTES LATÉRALES DROITES**
ZWEITAKTBRENNKRAFTMASCHINE EINES KRAFTFAHRZEUGS MIT VERDEHTEN EINLASSKANÄLEN MIT SEITLICHEN GERADEN KANTEN
TWO-STROKE COMBUSTION ENGINE OF AN AUTOMOTIVE VEHICLE WITH TWISTED INTAKE PORTS WITH LATERAL STRAIGHT EDGES

(30) Priorité: 01.08.2014 FR 1457495
(43) Date de publication de la demande: 07.06.2017
(73) Titulaire: Renault s.a.s., 92100 Boulogne-Billancourt (FR)
(72) Inventeur: DELAHAYE, Laurent, F-91450 Soisy sur Seine (FR); JUSTET, Frédéric, F-91190 Gif sur Yvette (FR); TRIBOTTE, Pascal, F-78000 Versailles (FR)
(86) Numéro de dépôt international: PCT/FR2015/050829
(87) Numéro de publication internationale: WO 2016/016522

(56) Documents cités:
- EP-A2- 0 108 706
- GB-A- 778 589
- US-A1- 2012 266 851

## Description

L'invention concerne un moteur thermique deux temps de véhicule automobile.

L'invention concerne plus particulièrement un moteur thermique deux temps de véhicule automobile, comportant au moins un cylindre axial comportant un alésage qui reçoit en coulissement au moins un piston qui délimite avec les parois dudit alésage une chambre de combustion, ledit cylindre comportant une paroi d'extrémité supérieure sensiblement transversale qui reçoit au moins une soupape d'échappement et au moins un injecteur de carburant, et une paroi périphérique qui comporte une partie inférieure dans laquelle sont agencées une pluralité de lumières périphériques, qui débouchent dans l'alésage et sont aptes à être ouvertes ou fermées par le piston en mouvement pour permettre ou interdire l'admission d'air dans la chambre de combustion, chaque lumière étant de forme sensiblement hexaèdrique, et étant délimitée dans la paroi périphérique par des faces conformées en quadrilatères qui comportent au moins une face supérieure et une face inférieure s'étendant sensiblement perpendiculairement à la direction axiale de l'alésage, dont des arêtes dites d'orientation de gaz s'étendent suivant l'épaisseur de la paroi du cylindre.

On connaît de nombreux exemples de moteurs de ce type.

Dans un tel moteur deux temps, de type dit "équi-courant" ou "uniflow", les gaz brûlés de la chambre de combustion sont évacués de ladite chambre par l'intermédiaire d'au moins une soupape, ou préférentiellement par l'intermédiaire de deux soupapes qui sont agencées dans la paroi d'extrémité supérieure sensiblement transversale de la chambre de combustion. Lorsque les lumières en bas du cylindre s'ouvrent suite à la descente du piston, l'air d'admission est introduit dans la chambre par les lumières et il vient pousser les gaz brûlés pour les évacuer au travers desdites soupapes.

Lors de cette phase, l'écoulement de l'air d'admission suit un profil aérodynamique tourbillonnaire qui est aussi connu sous le nom de « swirl », et qui est déterminé par un angle d'entrée qui est formé entre la direction générale des lumières et la direction radiale.

Lorsque le piston remonte, il ferme progressivement les lumières. L'échappement se ferme également. L'injection est commandée à ce moment.

Suivant l'intensité de l'écoulement tourbillonnaire, le jet de carburant injecté peut être fortement dévié.

Ainsi, si l'angle d'entrée des lumières est trop réduit, ce qui correspond à un mouvement tourbillonnaire d'intensité réduite, l'air d'admission entre sensiblement radialement dans le cylindre et se répartit suivant une forme de champignon en laissant des gaz brûlés à la périphérie. Cela ne permet pas un bon balayage du cylindre. Le jet de carburant, quant à lui, s'étend sensiblement suivant l'axe de la chambre de combustion et se concentre autour de cet axe sans s'intégrer de manière homogène à l'air d'admission.

Inversement, si l'angle d'entrée des lumières est trop élevé, c'est-à-dire si l'on oriente trop tangentiellement les lumières, l'écoulement tourbillonnaire ou "swirl" est trop violent l'air d'admission se répartit suivant une forme de cuvette à l'intérieur du cylindre. Le jet de carburant peut dans certaines conditions toucher la paroi du cylindre, ce qui n'est pas souhaitable car il se produit alors un phénomène de mouillage de la paroi qui s'oppose à une bonne vaporisation du carburant.

Une solution consiste à moduler l'intensité de l'écoulement tourbillonnaire en vrillant les lumières (comme par exemple dans les documents EP0108706 A2 et GB 778589 A), l'intensité de l'écoulement tourbillonnaire étant déterminée par l'obturation progressive de la lumière par le piston lors de sa remontée.

Ladite lumière vrillée comprend une face supérieure et une face inférieure dans l'épaisseur de la paroi du cylindre sensiblement transversales à l'axe du cylindre, lesdites faces présentant une orientation radiale opposée. Par exemple, la face supérieure peut être orientée selon une direction d'orientation présentant un angle avec la direction radiale du cylindre selon un premier sens tandis que la face inférieure est alors orientée selon une direction d'orientation présentant un angle avec ladite direction radiale dans un second sens opposé au premier sens. Ladite lumière présente alors un débouché dans l'alésage du cylindre entouré par des bords comportant une arête latérale de jointure entre ladite face supérieure et ladite face inférieure. Ladite arête latérale peut alors être inclinée et affecter la fiabilité de fonctionnement du moteur.

En effet, le piston comprend des segments aptes à racler la paroi de l'alésage du cylindre pour ramener de l'huile projetée pour assurer la lubrification. Lesdits segments sont alors au contact avec la paroi de l'alésage du cylindre et sont ainsi affectés par les lumières lors du coulissement du piston.

Ainsi, quand le piston descend, le segment se présente devant au moins une lumière qui débouche dans l'alésage par un débouché entouré par des bords comprenant une arête disposée sensiblement à gauche de la lumière et une arête disposée sensiblement à droite par rapport à un axe médian du débouché l'axe du cylindre. L'arête à gauche est susceptible de venir appuyer par réaction sur le segment. Le piston descendant, ledit appui se déplace sur le segment qui lui reste fixe en rotation. L'arête de gauche vient alors usiner ou éroder le segment. Lorsque le piston remonte, le phénomène se reproduit avec l'arête disposée à droite. Ainsi les segments sont fortement affectés par le débouché des lumières vers l'intérieur du cylindre.

Pour diminuer ledit phénomène, les bords du débouché de la lumière peuvent présenter un arrondi. Mais la réalisation d'un tel arrondi sur les bords du débouché est difficilement réalisable et donc couteuse.

Dans ce but, l'invention propose un moteur selon la revendication 1, du type décrit précédemment, comportant des lumières d'admission d'air vrillées telles que la direction d'orientation de la face supérieure forme avec la direction radiale un angle qui est orienté selon un premier sens déterminé, et que la direction d'orientation de la face inférieure forme avec la direction radiale un angle qui est orienté selon un second sens déterminé opposé au premier sens déterminé, aptes à orienter l'air d'admission différemment au fur et à mesure de la remontée du piston afin d'homogénéiser le mélange, et chacune des lumières vrillées présentant un débouché dans l'alésage du cylindre agencé pour diminuer l'appui du segment sur les bords du débouché.

Ainsi les lumières vrillées comportent une face supérieure et un face inférieure sensiblement transversales à l'axe du cylindre telles que :
- les arêtes d'orientation de gaz de la face supérieure forment avec la direction radiale du cylindre des angles qui sont orientés selon un premier sens déterminé et qui sont chacun compris dans une première plage angulaire déterminée,
- et les arêtes d'orientation de gaz de la face inférieure forment avec la direction radiale des angles qui sont orientés selon un second sens déterminé opposé au premier sens déterminé, et qui sont chacun compris dans une seconde plage angulaire déterminée

Lesdites lumières vrillées sont ainsi aptes à orienter l'air d'admission différemment au fur et à mesure de la descente puis de la remontée du piston, afin d'homogénéiser le mélange.

Le débouché desdites lumières vrillées dans l'alésage du cylindre est agencé pour diminuer les effets de l'appui du segment sur les bords dudit débouché afin d'améliorer la fiabilité dudit moteur.

L'invention vise donc à assurer la fiabilité de fonctionnement des segments fixés sur le piston coulissant longitudinalement dans le cylindre comportant des lumières vrillées adaptées à procurer un mouvement tourbillonnaire de l'écoulement des gaz dans ladite chemise.

Selon l'invention, les bords du débouché de la lumière dans l'alésage comporte au moins une arête de jointure entre la face supérieure et la face inférieure parallèle à l'axe du cylindre.

De façon avantageuse, lors du coulissement du piston entrainant le segment, ledit segment venant appuyer sur l'arête de jointure en un point de contact du segment qui ne varie pas lors du coulissement du segment. Ainsi, ladite arête n'est pas adaptée pour usiner le segment.

De façon avantageuse, le débouché comporte deux arêtes latérales parallèles à l'axe de coulissement du piston afin de réduire l'effet de l'appui du segment contre chacune des arêtes latérales du débouché dans les deux sens de coulissement du piston.

Selon d'autres caractéristiques de l'invention :
- le débouché dans l'alésage est sensiblement parallèpipèdique.

De façon avantageuse, la face supérieure peut être parallèle à la face inférieure. Le débouché dans l'alésage comprend donc une arête supérieure parallèle à une arête inférieure et les arêtes latérales sont parallèles entre elles. Ainsi l'appui du segment contre lesdites arêtes latérales entraine un effet réduit d'usinage des segments, de même l'appui dudit segment contre les arêtes des faces supérieure et inférieure dans l'alésage n'accroit pas de façon sensible l'effet d'usinage et d'érosion dudit segment par son coulissement dans le cylindre.
- le débouché dans l'alésage est sensiblement quadrilatéral présentant des arêtes orthogonales deux à deux.

De façon avantageuse, le débouché peut présenter une forme rectangulaire ou carrée.
- le débouché dans l'alésage est sensiblement oblong.

De façon avantageuse, la face supérieure peut être concave et présenter un bord en regard de l'alésage sensiblement circulaire sans accroître de façon sensible l'effet d'érosion et d'usinage du segment par son coulissement dans le cylindre.

La face inférieure peut être convexe et présenter un bord en regard de l'alésage sensiblement circulaire sans accroître également de façon sensible l'effet d'érosion et d'usinage du segment par son coulissement dans le cylindre.
- la direction d'orientation de la face supérieure forme avec la direction radiale un angle compris dans une première plage angulaire déterminée entre 25 et 45° et orienté selon un premier sens déterminé.
- la direction d'orientation de la face inférieure forme avec la direction radiale un angle compris dans une seconde plage angulaire déterminée entre 10 à 35 degrés dans le second sens déterminé opposé au premier sens déterminé.
- la distance entre la face inférieure et la face supérieure est comprise entre 5 et 20% de la course du piston.

D'autres caractéristiques et avantages de l'invention apparaîtront à la lecture de la description détaillée qui suit pour la compréhension de laquelle on se reportera aux dessins annexés dans lesquels :
- la figure 1 est une vue fantôme en perspective d'un cylindre d'un moteur selon l'état de la technique ;
- la figure 2 est une vue fantôme de l'injection de carburant dans un cylindre du moteur de la figure 1 soumis à un écoulement tourbillonnaire réduit ;
- la figure 3 est une vue fantôme de l'injection de carburant dans un cylindre du moteur de la figure 1 soumis à un écoulement tourbillonnaire élevé ;
- la figure 4 est une vue fantôme du cylindre du moteur de la figure 1 comportant des lumières dont l'angle d'entrée est réduit ;
- la figure 5 est une vue fantôme du cylindre du moteur de la figure 1 comportant des lumières dont l'angle d'entrée est élevé ;
- la figure 6 est une vue de détail en perspective des lumières d'un cylindre selon un état de la technique ;
- la figure 7 est une vue de détail en perspective des lumières d'un cylindre selon l'invention ;
- la figure 8 est une vue en coupe de la partie haute des lumières selon la ligne 8-8 de la figure 7;
- la figure 9 est une vue en coupe de la partie basse des lumières selon la ligne 9-9 de la figure 7;
- la figure 10 est une vue fantôme de la répartition de l'air d'alimentation dans un cylindre du moteur selon l'invention ;
- la figure 11 est une vue fantôme de l'injection de carburant dans un cylindre du moteur selon l'invention ;
- la figure 12 est une vue fantôme en perspective d'une portion du cylindre d'un moteur avec une lumière vrillée.
- la figure 13 est une vue de coupe du cylindre selon le plan A de la figure 12.
- la figure 14 est une vue de coupe du cylindre selon le plan B de la figure 12.

Dans la description qui va suivre, des chiffres de référence identiques désignent des pièces identiques ou ayant des fonctions similaires.

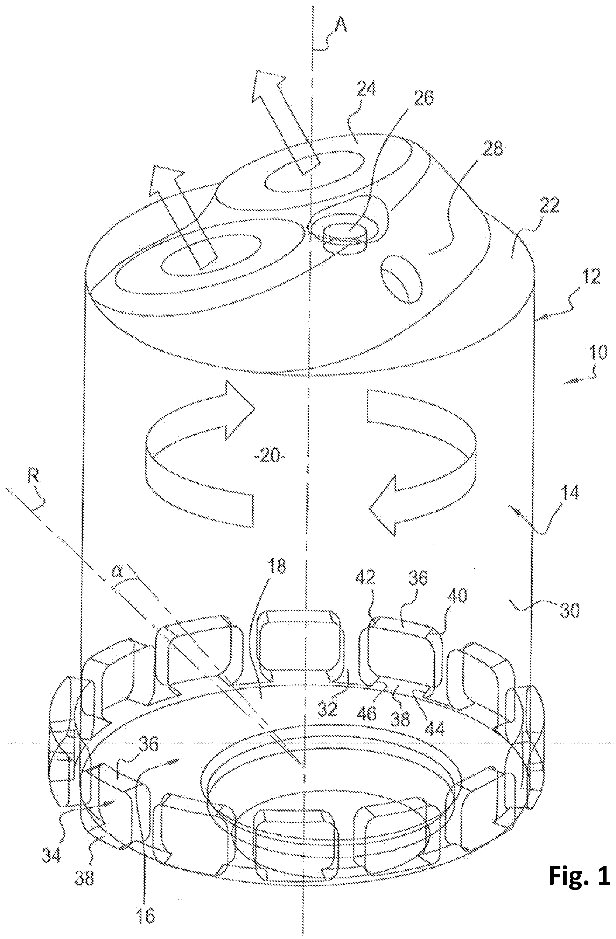

On a représenté à la figure 1 une partie 10 d'un moteur thermique deux temps de véhicule automobile réalisé conformément à un état de la technique.

De manière connue, la partie 10 du moteur thermique comporte au moins un cylindre axial 12 comportant un alésage 14 qui reçoit en coulissement au moins un piston 16 dont on aperçoit ici une face supérieure 18.

Le piston 16 délimite avec les parois de l'alésage 14 une chambre de combustion 20 dans le cylindre 12.

De manière connue, le cylindre 12 comporte une paroi 22 d'extrémité supérieure sensiblement transversale qui reçoit au moins un siège 24 d'une soupape (non représentée), un perçage 26 pour un injecteur (non représenté) et un filetage d'une bougie d'allumage 28.

Par ailleurs, le cylindre 12 comporte une paroi périphérique 30 dans une partie inférieure 32 de laquelle sont agencées une pluralité de lumières périphériques 34 qui débouchent dans l'alésage 14 et qui sont susceptibles d'être ouvertes ou fermées par le piston 16 en fonction de sa position de montée ou de descente pour permettre ou interdire l'admission d'air dans la chambre de combustion du cylindre 12 au travers desdites lumières 34.

Chaque lumière 34 est de forme héxaédrique et est délimitée dans la paroi périphérique 30 du cylindre 12 par des faces qui sont conformées sensiblement en quadrilatère.

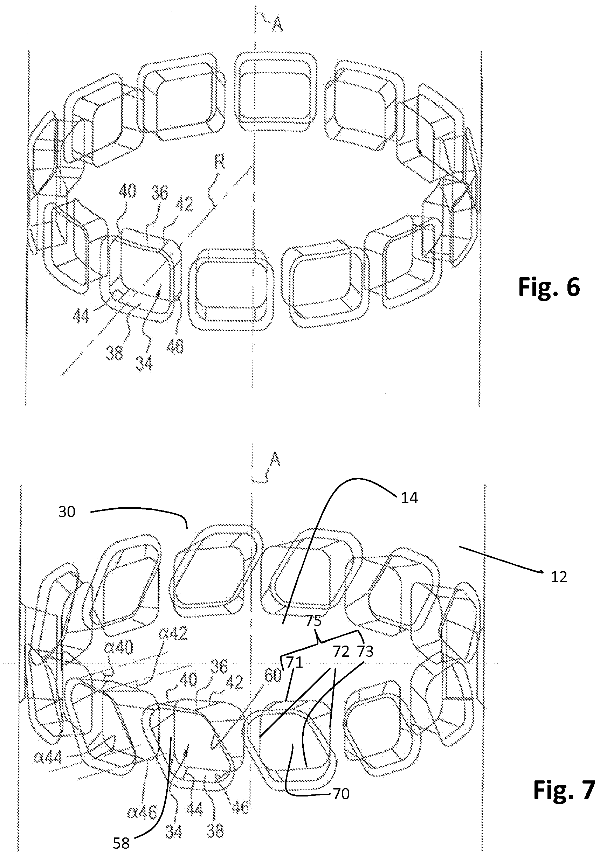

Ainsi, les faces comportent au moins une face transversale supérieure 36 et une face transversale inférieure 38 qui s'étendent sensiblement perpendiculairement à la direction axiale "A" de l'alésage 14, et dont des arrêtes radiales correspondantes 40, 42 de la face supérieure 36 et 44, 46 de la face inférieure 38 s'étendent suivant l'épaisseur de la paroi périphérique 30 du cylindre 12, comme représenté à la figure 6.

De manière connue, il est possible d'envisager plusieurs conformations des lumières hexaédriques 34.

Par convention, les lumières hexaédriques 34 sont orientées par rapport à une direction radiale "R" qui s'étend à partir de l'axe "A" du cylindre.

Comme représenté dans les figures 6, 8 et 9, la direction radiale R s'étend radialement depuis l'axe A du cylindre et traverse la lumière hexaédrique en passant par le centre du débouché de ladite lumière dans l'alésage 14 du cylindre.

En effet, il est conventionnellement admis d'orienter les lumières hexaédriques 34 selon un angle "α" déterminé par rapport à la direction radiale "R" de manière à provoquer, lors de l'admission de l'air au travers desdites fenêtres 34, un mouvement tourbillonnaire aussi connu sous le nom de "Swirl", dont l'intensité dépend de l'angle déterminé. Cet écoulement tourbillonnaire a pour but de chasser les gaz brûlés dans la chambre de combustion 20 en direction des sièges 24 des soupapes afin de permettre l'échappement desdits gaz brûlés.

Dès lors que le piston 16 est suffisamment remonté et a obturé les lumières périphériques 34, la compression de l'air préalablement admis dans la chambre de combustion 20 commence.

Simultanément, au cours de cette phase de compression se produit une injection de carburant en provenance de l'injecteur associé au perçage 26, qui permet de constituer un mélange carburé à l'intérieur de la chambre de combustion en mélangeant le carburant injecté à l'air admis.

L'injection du mélange carburé se produit, par conséquent, dans un flux d'air soumis au mouvement tourbillonnaire ou "Swirl".

La qualité de l'injection dépend directement de l'intensité du mouvement tourbillonnaire de l'air au sein de la chambre de combustion 20.

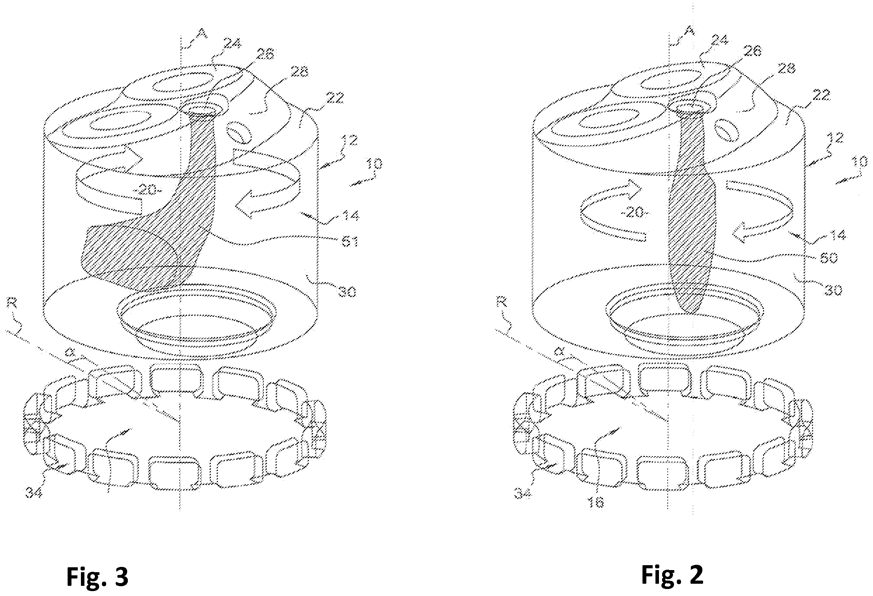

Ainsi, comme l'illustre la figure 2, un jet de carburant 50 pulvérisé dans un mouvement tourbillonnaire d'intensité réduite associé à un angle "α" réduit s'étend sensiblement suivant la direction axiale "A" dans une zone centrale de la chambre 20 de combustion.

Au contraire, un jet de carburant 51 pulvérisé dans un mouvement tourbillonnaire d'intensité élevée associé à un angle "α" élevé est sujet généralement à une déviation qui tend à le faire entrer en contact avec les parois périphériques 30, ce qui est préjudiciable à la qualité du mélange carburé.

En effet, il se produit alors un phénomène de mouillage de la paroi périphérique 30, qui provoque la condensation de gouttelettes de carburant sur les parois 30 de l'alésage 14 et donc une modification des proportions stœchiométriques du mélange qui nuisent à sa bonne inflammation.

Par ailleurs, l'orientation des lumières 34 influe également directement sur la répartition de l'air frais qui est admis dans la chambre de combustion 20.

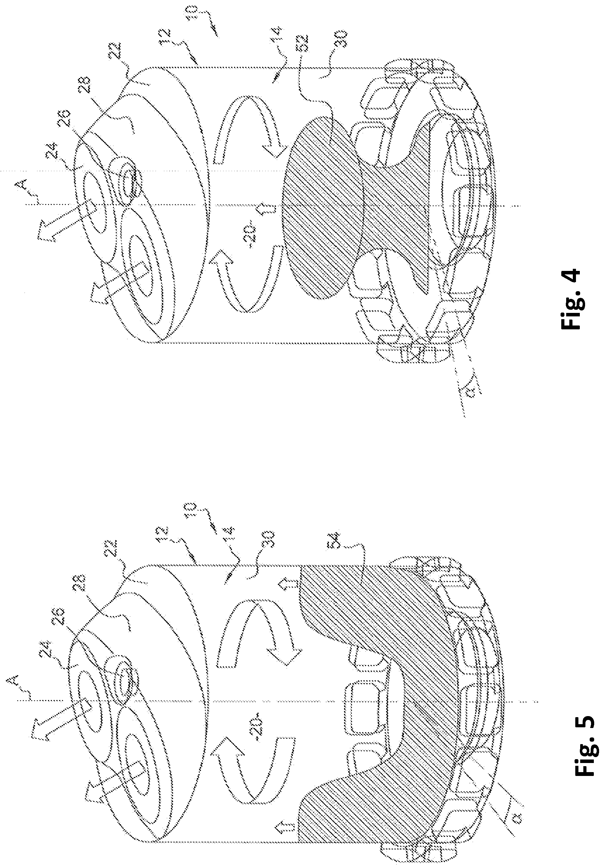

Comme l'illustre la figure 4, pour une valeur d'angle "a" réduit, l'admission de l'air au travers des lumières 34 s'effectue sensiblement radialement et il en résulte une formation, à l'intérieur de la chambre 20, d'air sous forme d'un champignon 52.

Au contraire, lorsque l'angle "a" est relativement élevé comme représenté à la figure 5, ce qui correspond à un mouvement tourbillonnaire d'intensité élevé, l'air d'admission est réparti sous la forme d'une cuvette 54.

Ainsi, l'angle "a", est plus ou moins important selon l'intensité du mouvement tourbillonnaire que l'on désire créer à l'intérieur de la chambre 20.

Toutefois, aucune des deux configurations précédemment évoquées ne permet d'obtenir une répartition optimale de l'air d'admission au sein de la chambre 20.

On remédie à cet inconvénient en proposant des lumières 34 dont l'orientation est variable.

Les lumières 34 connues de l'état de la technique comportent des arêtes 40, 42, 46, 48 dont l'angle "a" d'orientation est sensiblement identique d'une arête à l'autre.

On peut caractériser de manière différenciée l'orientation d'une lumière 34 par l'angle que forme la direction d'orientation de la chaque face supérieure 36 ou inférieure 38 avec la direction radiale "R".

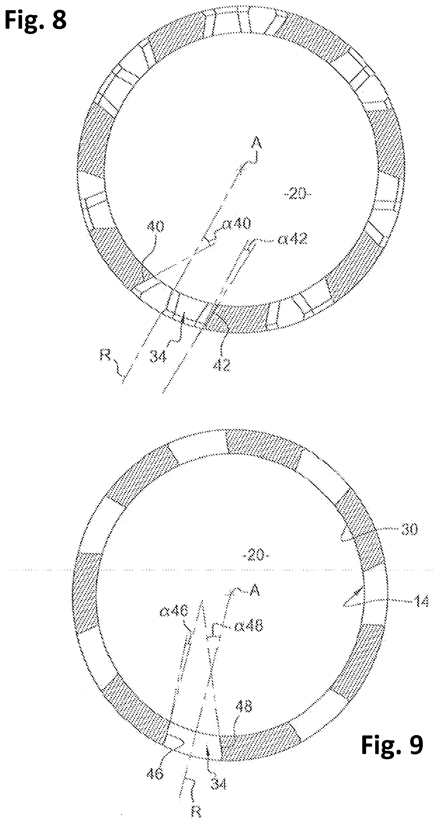

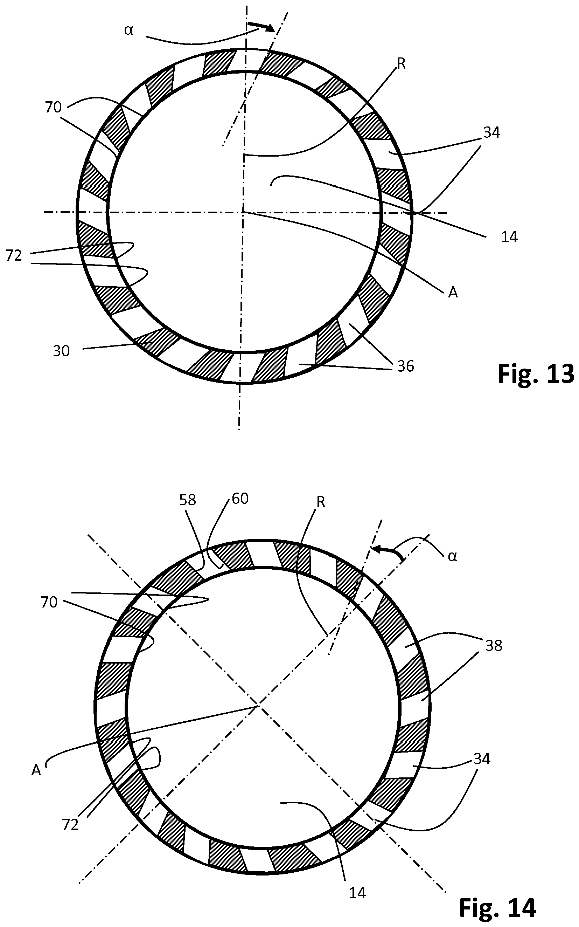

Ainsi, on peut caractériser de manière différenciée l'orientation d'une lumière 34 par l'angle formé entre les arrêtes 40, 42 de la face supérieure 36 ou les arrêtes 46, 48 de la face inférieure 38 avec la direction radiale "R" sur un plan orthogonal à l'axe A du cylindre, comme représenté dans les figures 8, 9 et 12 à 14.

Le cylindre 12 comporte propose des lumières vrillées 34 dont la direction d'orientation de la face supérieure 36 par rapport à la direction radiale "R" est différente de celle que forme la direction d'orientation de la face inférieure avec la direction radiale "R", pour proposer une lumière 34 vrillée apte à orienter l'air d'admission différemment au fur et à mesure de la remontée du piston 16.

Ainsi, le cylindre comporte des lumières twistées 34 dont l'orientation est variable, c'est-à-dire des lumières 34 dites vrillées dont des angles "α₄₀", "α₄₂" d'orientation des arrêtes 40, 42 de la face supérieure 36 et des angles "α₄₆", "α₄₈" des arrêtes 46, 48 de la face inférieure 38 sont différents de manière à canaliser différemment l'air d'admission lors de l'admission, le piston 16 du moteur obturant progressivement lors de sa remontée lesdites lumières 34 et favorisant ainsi la répartition de l'air d'admission et son orientation de manière différenciée en fonction de la partie de la lumière 34 traversée par le flux d'air.

Dans un moteur du type décrit précédemment, le cylindre dans lequel coulisse le piston comporte des lumières twistées dont la direction d'orientation de la face supérieure 36 forme avec la direction radiale "R" un angle α₄₀,α₄₂ qui est orienté selon un premier sens déterminé, et en ce que la direction d'orientation de la face inférieure 38 forme avec la direction radiale "R" un angle α₄₆,α₄₈ qui est orienté selon un second sens déterminé opposé au premier sens déterminé, pour proposer une lumière 34 vrillée apte à orienter l'air d'admission différemment au fur et à mesure de la remontée du piston 16, afin d'homogénéiser le mélange.

Ladite lumière vrillée comporte une surface supérieure en regard avec une surface inférieure et des surfaces latérales de jonction disposées l'une en regard de l'autre entre la surface supérieure et la surface inférieure. Elle débouche dans l'alésage 14 par un débouché 70 qui comporte une arête supérieure 71 et une arête inférieure 73 associée respectivement aux faces supérieure 36 et inférieure 38 et des arêtes latérales 72 gauche et droite de jonction associées auxdites surfaces latérales de jonction entre la surface supérieure et la surface inférieure de la lumière. On distingue les arêtes latérales 72 gauche et droite par rapport à un axe médian du débouché 70 joignant les centres des arêtes supérieure 71 et inférieure 73. Les arêtes latérales 72 gauche et droite peuvent alors être sensiblement inclinées par rapport à la direction de coulissement parallèle à l'axe A du cylindre.

Le piston est animé par un mouvement de coulissement selon l'axe A du cylindre. Il sépare l'alésage 14 en une partie supérieure où se produit la combustion du mélange de gaz et de carburant et une partie inférieure. Il est entouré par au moins un segment d'étanchéité (non représenté) destiné à assurer l'étancheité entre la partie supérieure et la partie inférieure de l'alésage, ou de raclage destiné à enlever l'huile projetée pour assurer la lubrification sur la paroi intérieure de l'alésage.

Ainsi, quand le piston descend, le segment d'étanchéité en contact avec la paroi 30 de l'alésage 14 du cylindre peut se présenter devant au moins une lumière vrillée 34. Il vient alors appuyer sur les arêtes supérieure 71, inférieure 73 et latérales 72 gauche et droite du débouché 70 de ladite lumière vrillée. L'arête gauche est susceptible de venir appuyer par réaction sur le segment. Le piston descendant, ledit appui se déplace sur le segment qui lui reste fixe en rotation. L'arête gauche vient alors usiner ou éroder le segment. Lorsque le piston remonte, le phénomène se reproduit avec l'arête droite. Ainsi les segments sont fortement affectés par le débouché des lumières vers l'intérieur du cylindre.

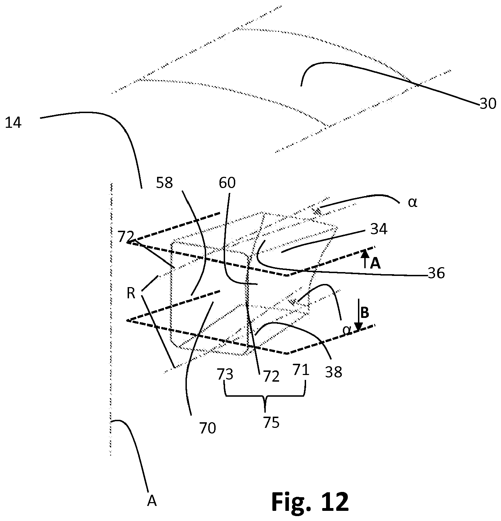

Afin de réduire cet effet d'usinage, selon l'invention, chacune desdites lumières 34 vrillées présente un débouché 70 dans l'alésage 14 du cylindre qui comporte au moins une arête latérale 72 sensiblement parallèle à l'axe de coulissement du piston. Ladite lumière vrillée 34 avec des arêtes latérales droite est représentée en figures 12 à 14. Autrement dit, les arêtes 40, 42 d'orientation de gaz de la face supérieure 36 forment avec la direction radiale des angles "α₄₀", "α₄₂" qui sont orientés selon un premier sens déterminé et qui sont chacun compris dans une première plage angulaire déterminée et les arêtes 46, 48 de la face inférieure 38 forment avec la direction radiale "R" des angles "α₄₆", "α₄₈" qui sont orientés selon un second sens déterminé opposé au premier sens déterminé et qui chacun sont compris dans une seconde plage angulaire déterminée pour proposer une lumière 34 vrillée apte à orienter l'air d'admission différemment au fur et à mesure de la remontée du piston 16.

Cette configuration a été représentée en particulier aux figures 7 à 9.

Sur les figures 7 à 9, on a affecté les références "α₄₀" et "α₄₂" aux angles formés entre les arêtes respectives 40 et 42 de la face supérieure 36 de la lumière 34 et la direction radiale "R", et les références "α₄₆, α₄₈" aux angles formés entre les arrêtes 46 et 48 de la face inférieure 38 de la lumière 34 et la direction radiale "R".

Dans cette configuration, les angles "α₄₀, α₄₂" sont, par conséquent, conformément à l'invention, orientés selon un premier sens déterminé, ici par exemple le sens horaire, comme représenté à la figure 8, tandis que les angles "α₄₆", "α₄₈" des arrêtes respectives 46 et 48 de la face inférieure 38 de la lumière 34 sont orientés suivant le sens anti-horaire, comme représenté à la figure 9.

De façon préférentielle, l'angle α₄₀,α₄₂ selon le premier sens d'orientation est compris dans une première plage angulaire déterminée entre 25 et 45 degrés dans un premier sens déterminé.

Par ailleurs, les angles α₄₆,α₄₈ selon le second sens d'orientation sont compris dans une plage angulaire déterminée entre 10 à 35 degrés dans le second sens déterminé opposé au premier sens déterminé.

Ainsi la première plage angulaire associée aux angles d'orientation "α₄₀, α₄₂" des arêtes 40 et 42 de la face supérieure 36 de la lumière 34 est comprise entre les valeurs de 25 et 45° par rapport à la direction radiale "R" dans le premier sens déterminé.

La seconde plage angulaire associée aux angles d'orientation "α₄₆", "α₄₈" des arrêtes 46 et 48 de la face inférieure 38 de la lumière 34 est comprise entre les valeurs angulaires de 10 et 35° par rapport à la direction radiale "R" dans le sens anti-horaire opposé au premier sens déterminé.

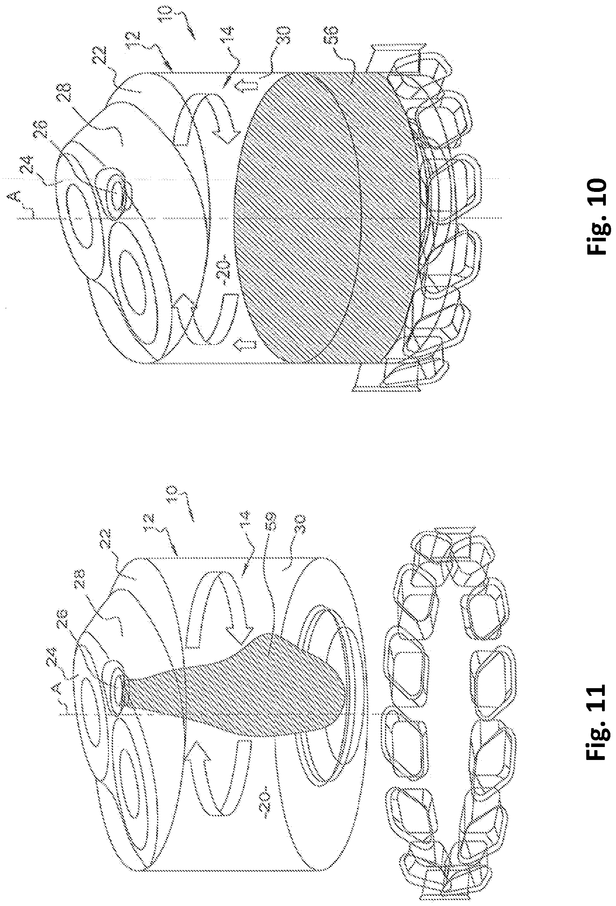

Cette configuration permet, comme l'illustre la figure 10, de proposer une répartition 56 de l'air d'admission qui est sensiblement uniforme puisqu'elle résulte d'une orientation de l'air au travers des lumières 34 qui varie progressivement au fur et à mesure de la descente puis de la remontée du piston 16 et de l'obturation des lumières 34.

En effet, lorsque le piston 16 descend, il canalise en premier lieu l'air au travers de l'intégralité des lumières 34 et il n'obture que peu ou pas lesdites lumières 34. L'air admis est donc orienté sensiblement par les quatre arrêtes 46, 48 de la face inférieure 38 et 40, 42 de la face supérieure 36.

Puis, lorsque le piston 16 remonte, la partie inférieure de chaque lumière 34 est obturée et l'air n'est quasiment plus orienté que par les arrêtes 40, 42 de la face supérieure 36 de la lumière 34 qui sont plus fortement inclinées que les arêtes inférieures 46, 48 de la face inférieure 38 de la lumière 34.

Le résultat est sensiblement la combinaison de deux mouvements tourbillonnaires, un mouvement tourbillonnaire réduit puisque provoqué par une admission pratiquement radiale, et un mouvement tourbillonnaire élevé puisque produit par une orientation sensiblement tangentielle.

La répartition 56 de l'air est donc parfaitement uniforme dans la chambre 20 de combustion.

Selon la figure 12, la lumière 34 présente un débouché 70 dans l'alésage 14 entouré par des bords 75 comprenant deux arêtes latérales 72 de jointure entre la face supérieure 38 et la face inférieure 36, sensiblement parallèles entre elles et une arête supérieure et une arête inférieure.

Lesdites arêtes latérales de jointure sont sensiblement parallèles à l'axe A de coulissement du piston identique à l'axe du cylindre.

L'arête supérieure 71 présente ainsi un arc de cercle sensiblement égal à l'arc de cercle de l'arête inférieure 73.

Le segment passe devant la lumière 34 et l'arête latérale va appuyer par réaction sur le segment. L'arête latérale 62 étant parallèle à l'axe de coulissement du piston, l'appui reste sensiblement à la même position relative par rapport au segment et ne vient donc pas usiner ou éroder le segment. Lorsque le piston descend ou remonte, le phénomène est identique avec l'autre arête latérale 72 voisine de laditelumière 34.

Le segment n'est donc pas suceptible d'être usiné ou érodé par le passage devant la lumière vrillée lors du coulissement en va-et-vient du piston dans l'alésage 14 du cylindre.

Le segment vient également appuyer sur les arêtes supérieure et inférieure sur un déplacement relativement court correspondant à la dénivellation selon l'axe de coulissement de chacune des surfaces supérieure 36 et inférieure 38.

Ainsi, comme l'illustre la figure 11, un jet 59 de carburant effectué dans ces conditions au sein de la chambre 20 de combustion s'étend suivant la direction axiale de manière uniforme mais plus amplement dans la chambre 20 que le jet de carburant 50 effectué dans un mouvement tourbillonnaire réduit qui a été représenté précédemment en référence à la figure 2. Le jet 59 de carburant ne présente pas non plus les irrégularités de répartition du mélange carburé 51 injecté dans un mouvement tourbillonnaire élevé comme précédemment représenté à la figure 3.

Dans le mode de réalisation préféré de l'invention qui a été représenté à la figure 7, les faces supérieure 36 et inférieure 38 sont sensiblement planes.

La face supérieure 36 et ou la face inférieure 38 peut être est légèrement inclinée par rapport à un plan orthogonal à l'axe A du cylindre 12 d'un angle (non représenté) inférieur à 10°.

Le débouché 70 peut présenter une forme sensiblement quadrilatérale formée par les arêtes supérieure 71 et inférieure 73 desdites faces supérieure 36 et inférieure 38 planes et les arêtes latérales 72 .

Selon un autre mode de réalisation, ladite forme peut être rectangulaire voire carrée lorsque la face supérieure 36 est parallèle à la face inférieure 38.

Cette configuration n'est pas limitative de l'invention. En variante (non représentée) la face supérieure 36 est concave et tournée vers la face inférieure 38. De même, la face inférieure peut être convexe et tournée vers la face supérieure.

Le débouché 70 de la lumière vrillée 34 dans l'alésage 14 présente alors sensiblement une forme sensiblement oblongue étirée selon l'axe de coulissement du psiton et comportant des arêtes latérales 72 parallèles avec ledit axe de coulissement.

De façon avantageuse, l'angle d'orientation "α₄₀, α₄₂" d'au moins une arrête 40, 42 de la face supérieure 36 de la lumière 34 et l'angle "α₄₆, α₄₈" d'orientation de l'arrête 46, 48 en regard de la face inférieure 38 associée forme de préférence un écart angulaire minimal déterminé qui est propre à conformer des faces latérales sensiblement verticales 58, 60 de la lumière 34, qui sont déterminées par lesdites arrêtes 40, 46, d'une part et, 42, 48, d'autre part, comme représenté à la figure 7, selon une portion de conduit divergent orientée vers l'intérieur du cylindre. Cette configuration permet de favoriser la diffusion de l'air à l'intérieur de la chambre 20 de combustion.

Ainsi, le choix d'un écart angulaire minimal déterminé entre les angles d'orientation "α₄₀" et "α₄₆" de deux arrêtes superposées 40, 46 et/ou entre les angles d'orientation "α₄₂", "α₄₈" de deux arrêtes superposées 42, 48 permettent de conformer au moins une face latérale verticale 58 et ou une face latéral verticale 60 sous la forme d'une portion de conduit divergent orientée vers l'intérieur du cylindre 14, ce qui permet d'améliorer la diffusion de l'air à l'intérieur de la chambre 20 de combustion.

Le niveau d'air frais qui monte permet de ne plus piéger les gaz brulés qui sont de ce fait entrainés vers les soupapes. L'évacuation des gaz brulés est donc faite automatiquement.

Il sera compris que chaque face latérale verticale 58, 60 s'étendant sensiblement selon l'axe A du cylindre 12 rejoint donc la face supérieure 36 et la face inférieure 38. A cet effet, les faces supérieure et inférieure 36, 38 sont chacune jointes aux faces latérales par des congés 59. Le rayon d'un tel congé 59 est compris entre 1mm et 3mm.

Le meilleur dimensionnement des lumières 34 sera obtenu avec une distance entre la face inférieure 38 et la face supérieure 36 comprise entre 5 et 20% de la course du piston 16.

De façon préférentielle, le nombre de lumières peut varier de 8 à 30 pour des diamètres de cylindres variant jusqu'à 75mm, la hauteur desdites lumières étant comprise entre 5 et 12 mm.

L'invention permet donc de favoriser avantageusement le remplissage en gaz frais et l'évacuation des gaz brulés d'un moteur de type deux temps comportant des lumières 34 périphériques tout en améliorant la fiabilité dudit moteur.

## Revendications

1. Moteur thermique deux temps de véhicule automobile, comportant au moins un cylindre axial (12) comportant un alésage (14) qui reçoit en coulissement un piston (16),
ledit cylindre (12) comportant une paroi périphérique (30) qui comporte une partie inférieure (32) dans laquelle sont agencées une pluralité de lumières périphériques (34), qui débouchent dans l'alésage (14) et sont aptes à être ouvertes ou fermées par le piston (16) entouré par au moins un segment, en mouvement pour permettre ou interdire l'admission d'air dans le cylindre (12),
chaque lumière (34) étant orientée par une direction radiale (R) s'étendant radialement depuis l'axe (A) du cylindre et passant par le centre du débouché (70) de chaque lumière dans l'alésage, et délimitée dans la paroi périphérique (30) par une face supérieure (36) et une face inférieure (38) en vis-à-vis délimitées par des arêtes radiales (40, 42, 46, 48) s'étendant selon des directions d'orientation sensiblement orthogonales à la direction axiale (A) du cylindre (12) **caractérisé en ce que**
la direction d'orientation des arêtes radiales de la face supérieure (36), forme avec la direction radiale (R) sur un plan orthogonal à la direction axiale (A) du cylindre, un angle (040,042) qui est orienté selon un premier sens déterminé, et la direction d'orientation des arêtes radiales de la face inférieure (38) forme avec la direction radiale (R) sur ledit plan orthogonal à la direction axiale (A) du cylindre, un angle (α₄₆,α₄₈) qui est orienté selon un second sens déterminé opposé au premier sens déterminé, chaque lumière (34) vrillée dirigeant l'air d'admission selon deux orientations en sens contraire entrainant un mouvement tourbillonnaire réduit provoqué par une admission pratiquement radiale quand le piston n'obture pas chaque lumière, et selon une orientation sensiblement tangentielle selon le premier sens déterminé entrainant un mouvement tourbillonnaire élevé au fur et à mesure de la remontée du piston (16), le débouché (70) de chaque lumière (34) dans l'alésage (14), entouré par des bords (75) comprenant au moins une arête latérale de jointure (72) entre la face supérieure (36) et la face inférieure (38) parallèle à l'axe (A) du cylindre.

2. Moteur thermique selon la revendication 1, caratérisé en ce que le débouché (70) de chaque lumière dans l'alésage est sensiblement parallélépipédique.

3. Moteur thermique selon l'une quelconque des revendications 1 ou 2, **caractérisé en ce que** le débouché (70) de chaque lumière (34) dans l'alésage (14) est sensiblement quadrilatéral présentant deux arêtes orthogonales deux à deux.

4. Moteur thermique selon l'une quelconque des revendications 1 ou 2, caratérisé en ce que le débouché (70) de chaque lumière (34) dans l'alésage (14) est sensiblement oblong.

5. Moteur thermique selon l'une quelconque des revendications 1 à 4, **caractérisé en ce que** la direction d'orientation de la face supérieure forme avec la direction radiale (R) angle (α40,α42) compris dans une première plage angulaire déterminée entre 25 et 45° et orienté selon premier sens déterminé.

6. Moteur thermique selon la revendication 5, **caractérisé en ce que** la direction d'orientation de la face inférieure forme avec la direction radiale l' angle (α46,α48) compris dans une seconde plage angulaire déterminée entre 10 à 35 degrés dans le second sens déterminé opposé au premier sens déterminé.

7. Moteur thermique selon l'une quelconque des revendications 1 à 6, **caractérisé en ce que** la distance entre la face inférieure et la face supérieure est comprise entre 5 et 20% de la course du piston.

## Patentansprüche

1. Zweitaktverbrennungsmotor eines Kraftfahrzeugs, aufweisend mindestens einen axialen Zylinder (12) mit einer Bohrung (14), die einen Kolben (16) gleitend aufnimmt,
wobei der Zylinder (12) eine Umfangswand (30) aufweist, die einen unteren Abschnitt (32) aufweist, in dem eine Mehrzahl von umlaufenden Öffnungen (34) angeordnet sind, die in die Bohrung (14) führen und von dem Kolben (16) geöffnet oder geschlossen werden können, der von mindestens einem Segment umgeben ist, der sich bewegt, um den Einlass von Luft in den Zylinder (12) zu gestatten oder zu unterbinden,
wobei jede Öffnung (34) nach einer Radialrichtung (R) ausgerichtet ist, die sich radial von der Achse (A) des Zylinders erstreckt und den Mittelpunkt der Mündung (70) jeder Öffnung in die Bohrung durchläuft und in der Umfangswand (30) von einer Oberseite (36) und einer gegenüberliegenden Unterseite (38) begrenzt ist, die von Radialkanten (40, 42, 46, 48) begrenzt sind, die sich in Ausrichtungsrichtungen erstrecken, die im Wesentlichen orthogonal zur Axialrichtung (A) des Zylinders (12) verlaufen
**dadurch gekennzeichnet, dass**
die Ausrichtungsrichtung der Radialkanten der Oberseite (36) mit der Radialrichtung (R) in einer Ebene, die orthogonal zur Axialrichtung (A) des Zylinders verläuft, einen Winkel (α₄₀,α₄₂) bildet, der in einer ersten bestimmten Richtung ausgerichtet ist, und die Ausrichtungsrichtung der Radialkanten der Unterseite (38) mit der Radialrichtung (R) in der Ebene, die orthogonal zur Axialrichtung (A) des Zylinders verläuft,
einen Winkel (α₄₆,α₄₈) bildet, der in einer zweiten bestimmten Richtung ausgerichtet ist, die der ersten bestimmten Richtung entgegengesetzt ist, wobei jede verdrehte Öffnung (34) die Einlassluft in zwei Ausrichtungen in entgegengesetzter Richtung leitet, wobei eine verringerte Wirbelbewegung herbeigeführt wird, die von einem praktisch radialen Einlass verursacht wird, wenn der Kolben nicht jede Öffnung verschließt, und in einer Ausrichtung, die im Wesentlichen tangential in der ersten bestimmten Richtung verläuft, wobei bei der Wiederaufwärtsbewegung des Kolbens (16) eine erhöhte Wirbelbewegung herbeigeführt wird,
die Mündung (70) jeder Öffnung (34) in die Bohrung (14), die von Rändern (75) umgeben ist, umfassend mindestens eine seitliche Verbindungskante (72) zwischen der Oberseite (36) und der Unterseite (38) parallel zur Achse (A) des Zylinders.

2. Verbrennungsmotor nach Anspruch 1, **dadurch gekennzeichnet, dass** die Mündung (70) jeder Öffnung in die Bohrung im Wesentlichen quaderförmig ist.

3. Verbrennungsmotor nach einem der Ansprüche 1 oder 2, **dadurch gekennzeichnet, dass** die Mündung (70) jeder Öffnung (34) in die Bohrung (14) im Wesentlichen vierseitig ist, wobei sie zwei Kanten aufweist, die paarweise orthogonal sind.

4. Verbrennungsmotor nach einem der Ansprüche 1 oder 2, **dadurch gekennzeichnet, dass** die Mündung (70) jeder Öffnung (34) in die Bohrung (14) im Wesentlichen länglich ist.

5. Verbrennungsmotor nach einem der Ansprüche 1 bis 4, **dadurch gekennzeichnet, dass** die Ausrichtungsrichtung der Oberseite mit der Radialrichtung (R) den Winkel (α40, α42) bildet, der in einem ersten bestimmten Winkelbereich zwischen 25 und 45° liegt und in der ersten bestimmten Richtung ausgerichtet ist.

6. Verbrennungsmotor nach Anspruch 5, **dadurch gekennzeichnet, dass** die Ausrichtungsrichtung der Unterseite mit der Radialrichtung den Winkel (α46, α48) bildet, der in einem zweiten bestimmten Winkelbereich zwischen 10 und 35° liegt, in der zweiten bestimmten Richtung, die der ersten bestimmten Richtung entgegengesetzt ist.

7. Verbrennungsmotor nach einem der Ansprüche 1 bis 6, **dadurch gekennzeichnet, dass** der Abstand zwischen der Unterseite und der Oberseite zwischen 5 und 20 % des Wegs des Kolbens beträgt.

## Claims

1. Motor vehicle two-stroke combustion engine comprising at least one axial cylinder (12) comprising a bore (14) which receives a piston (16) sliding therein,
said cylinder (12) comprising a peripheral wall (30) which comprises a lower portion (32) in which there are arranged a plurality of peripheral ports (34) which open into the bore (14) and are able to be opened or closed by the piston (16), which is surrounded by at least one moving ring to allow or prevent the intake of air into the cylinder (12), each port (34) being oriented in a radial direction (R) extending radially from the axis (A) of the cylinder and passing through the centre of the opening (70) of each port into the bore, and delimited in the peripheral wall (30) by an upper face (36) and a lower face (38) which are mutually opposite and delimited by radial edges (40, 42, 46, 48) extending in directions of orientation substantially orthogonal to the axial direction (A) of the cylinder (12),
**characterized in that** the direction of orientation of the radial edges of the upper face (36) forms with the radial direction (R), in a plane orthogonal to the axial direction (A) of the cylinder, an angle (α₄₀, α₄₂) which is oriented in a first predetermined direction, and the direction of orientation of the radial edges of the lower face (38) forms with the radial direction (R), in said plane orthogonal to the axial direction (A) of the cylinder, an angle (α₄₆, α₄₈) which is oriented in a second predetermined direction opposite to the first predetermined direction, each twisted port (34) directing the intake air in two oppositely directed orientations so as to cause a reduced vortex movement produced by a virtually radial intake when the piston does not shut off each port, and in a substantially tangential orientation in the first predetermined direction so as to cause an increased vortex movement as the piston (16) rises, the opening (70) of each port (24) into the bore (14) being surrounded by borders (75) comprising at least one lateral joining edge (72) between the upper face (36) and the lower face (38) parallel to the axis (A) of the cylinder.

2. Combustion engine according to Claim 1, **characterized in that** the opening (70) of each port into the bore is substantially parallelepipedal.

3. Combustion engine according to either one of Claims 1 and 2, **characterized in that** the opening (70) of each port (34) into the bore (14) is substantially quadrilateral with two edges orthogonal in pairs.

4. Combustion engine according to either one of Claims 1 and 2, **characterized in that** the opening (70) of each port (34) into the bore (14) is substantially oblong.

5. Combustion engine according to any one of Claims 1 to 4, **characterized in that** the direction of orientation of the upper face forms with the radial direction (R) the angle (α₄₀, α₄₂) within a first predetermined angular range between 25 and 45 degrees and oriented in the first predetermined direction.

6. Combustion engine according to Claim 5, **characterized in that** the direction of orientation of the lower face forms with the radial direction the angle (α₄₆, α₄₈) within a second predetermined angular range between 10 to 35 degrees in the second predetermined direction opposite to the first predetermined direction.

7. Combustion engine according to any one of Claims 1 to 6, **characterized in that** the distance between the lower face and the upper face is between 5 and 20% of the stroke of the piston.
